# EUROPEAN PATENT SPECIFICATION

(11) **EP 0 639 335 B1**
(45) Date of publication and mention of the grant of the patent: **17.06.1998**
(21) Application number: 94111690.7
(22) Date of filing: 27.07.1994
(51) Int. Cl.: A23L 2/44, A23C 9/154, A23C 9/137

(54) **Acidic drink and method for its production**
Angesäuertes Getränk und Herstellungsmethode
Boissons acidifiée et methode pour la production

(30) Priority: 30.07.1993 CH 2304/93
(43) Date of publication of application: 22.02.1995
(73) Proprietor: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Lelli, Angelo, I-12050 Racca-Guarene (Cuneo) (IT); Ferrero, Pietro, B-1640 Rhode-St-Genese (BE)
(74) Representative: Rambelli, Paolo

(56) References cited:
- EP-A- 0 385 051
- DATABASE WPI Week 8311, Derwent Publications Ltd., London, GB; AN 83-26304K & JP-A-58 020 180 (CALPIS SHOKUHIN KOG) 5 February 1983
- DATABASE WPI Week 8510, Derwent Publications Ltd., London, GB; AN 85-058049 & JP-A-60 012 930 (SAN EI CHEM IND KK) 23 January 1985
- DATABASE WPI Week 8309, Derwent Publications Ltd., London, GB; AN 83-21572K & JP-A-58 013 358 (KUBUN KK) 25 January 1983
- DATABASE WPI Week 8951, Derwent Publications Ltd., London, GB; AN 89-374561 & JP-A-1 281 033 (T. KATO) 13 November 1989
- DATABASE WPI Week 8549, Derwent Publications Ltd., London, GB; AN 85-306098 & JP-A-60 210 955 (CALPIS SHOKUHIN KOG) 23 October 1985
- DATABASE WPI Week 8428, Derwent Publications Ltd., London, GB; AN 84-173892 & JP-A-59 095 847 (K. MATSUSHITA) 2 June 1984
- DATABASE WPI Week 8607, Derwent Publications Ltd., London, GB; AN 86-044930 & JP-A-60 262 584 (SEIKEN KK) 25 December 1985

## Description

The present invention relates to a drink with an acidic pH based on an aqueous mixture of a vegetable extract, juice or infusion and milk products.

Drinks based on the components listed above are desirable for their refreshing characteristics due to their mineral salt content resulting from the vegetable component and for their nutritional content provided by the milk proteins.

The production of such drinks, particularly on an industrial scale, however, is obstructed by problems inherent in the physical stability of mixtures of such components.

Database WPI, Week 8510, Derwent Publications Ltd., London, GB, AN 85-058049 discloses an acidic milky drink. Database WPI, Week 8311, Derwent Publications Ltd., London, GB, AN 83-96304k discloses an acidic drink.

In order to provide a drink including the components listed above which is chemically and physically stable, the present invention provides a drink which is characterised in that it includes a) pectin, b) a polyol alginate, and c) at least one ester of a fatty acid selected from the group consisting of lauric, myristic, palmitic, caprylic and capric acids and mixtures of esters of the said fatty acids.

The drink which is the subject of the present invention has an acidic pH generally less than 5 and preferably between 3 and 4.5.

As the aqueous component of vegetable origin there may be used infusions of aromatic plants, particularly infusions of tea, Java jute, dog-rose and/or extracts or juices of fruits such as, for example, strawberries, raspberries, bilberries, cherries, apples, pineapples, pears, peaches and the like.

The milk derivative is typically constituted by milk, preferably skimmed (fat content of less than 0.3%) cream or yoghurt. In the preferred embodiment, the drink includes milk proteins and milk enzymes resulting from the addition of yoghurt as such to the drink, or milk proteins derived from the use of milk, preferably skimmed, and milk enzymes added in a suitable manner to cause the lactic fermentation of the drink, as will be described more fully below.

The use of the milk component, in addition to providing milk proteins, generally in quantities not higher than 3.5% by weight and preferably in quantities not higher than 2% by weight, also adds lipids to the drink, in concentrations generally not higher than 3.6% by weight, preferably not higher than 2% by weight.

The drink further includes carbohydrates selected from the group consisting of sucrose, dextrose, fructose, invert sugar, sorbitol and their mixtures. The calorific value of the drink is generally less than 418 kJ/100g (100 kCal/100g), preferably less than 334.4 kJ/100g (80 kCal/100g).

The components a), b) and c) are used in quantities sufficient to provide a physically and chemically stable mixture at the acidic pH value of the particular drink.

The pectin is generally used in concentrations of up to 1% by weight and preferably less than 0.3% by weight in the drink.

The polyol alginate preferably used is propylene glycol alginate in quantities of from 0.01 to 0.5% by weight, preferably less than 0.05% by weight.

Triglyceride esters are typically used as the fatty acid esters. Of the fatty acids it is preferred to use lauric acid, possibly mixed with esters of myristic, palmitic and caprylic acids. Mixtures of esters are preferred in which lauric acid constitutes at least 30% and preferably between 30 and 50% of the total fatty acid content.

Dried coconut milk may conveniently and to advantage be used as the source of the fatty acid ester, this being in the form of a powder obtained by dehydration, possibly after pasteurisation, of an emulsion constituted by coconut pulp and water. Dried coconut milk generally has a moisture content of less than 2%, a fat content generally up to 70% by weight, proteins in quantities normally up to 10% by weight and carbohydrates generally in quantities of up to 25% by weight. When the fatty acid ester content is provided with the use of dried coconut milk, the quantity added is generally between 0.1 and 5% by weight and preferably between 0.5 and 2% by weight.

It has been found that dried, powdered coconut milk is particularly advantageous because of its emulsifying characteristics which improve the stability of the mixture, particularly when it is used in combination with pectin and propylene glycol alginate at a pH of less than 5. Moreover its use contributes substantially to improving the palatability of the drink, to which it gives a pleasing flavour, while eliminating problems of aftertaste which may result from the presence of yoghurt or fermented milk.

A further subject of the invention is constituted by methods for the preparation of the drink.

More generally, the method includes the preparation of a phase based on the milk products, preferably yoghurt, and including pectin and the said fatty acid esters as additives, preferably provided by the addition of dried coconut milk and the separate preparation of a flavoured aqueous phase including a vegetable juice, extract or infusion, with the addition of propylene glycol alginate; the two phases are then mixed in the desired ratio, generally between 1:1 and 3:1 so as to provide a mixture having protein and lipid contents within the ranges mentioned above, preferably at a temperature not higher than 15°C.

Following the mixing, the mixture thus obtained is preferably pasteurised and homogenised after which any final flavouring agents may be added.

In the preferred embodiment, the drink is prepared by lactic fermentation carried out in situ. It has been found that lactic fermentation carried out in a dilute mixture over prolonged periods is suitable to give a stable drink having the desired organoleptic properties.

In this case the method of preparation of the drink according to the invention includes the preparation of an aqueous mixture based on a milk product, preferably skimmed milk and a vegetable juice, extract or infusion including the stabilisers a), b) and c) mentioned above, the mixture having a milk protein concentration of between 0.5 and 3.5% by weight, preferably not higher than 2% by weight and a total solids content preferably less than 25% and the subjection of the mixture to lactic fermentation by inoculation with milk enzymes.

In the preferred embodiment, the method includes the preparation of:
- a phase 1a), typically having an acidic pH of less than 5.5 including a vegetable infusion, possibly of fruit, and an alginate and the separate preparation of a phase based on milk products, preferably constituted by skimmed milk, with stabilising additives constituted by pectin and esters of the said fatty acids, preferably dried coconut milk.

The two phases 1a) and 1b) are mixed, preferably at a temperature below 15°C, so as to give a mixture with an acidic pH generally less than 5.

The mixing of the two phases is carried out so as to give a dilute suspension having a total solids content of preferably less than 25% and a milk-protein concentration generally between 0.5% and 3.5% by weight.

The suspension thus obtained is inoculated with milk enzymes and the suspension is subjected to prolonged fermentation at a temperature preferably between 40 and 50°C for a period of 3 to 10 hours. The fermentation step is preferably carried out so as to convert at least 40%, preferably at least 65%, of the lactose present (concentration from 0.5% to 1% by weight) to lactic acid.

Following the fermentation, the acidic mixture thus obtained, which typically has a pH of less than 4, is mixed with an aqueous phase 2) with an acidic pH, preferably less than 3.5, constituted by an aqueous suspension or solution of a vegetable infusion, extract or fruit juice. Again in this case the mixing of the phase 2) with the fermentation phase is carried out at a temperature below 15°C. The mixture thus obtained is then preferably pasteurised and homogenised.

### Example 1

A drink is prepared having the following final composition expressed as percentages by weight:
- - infusion of Java jute: 65%
- - yoghurt: 17%
- - dried coconut powder: 1.5%
- - propylene glycol alginate: 0.05%
- - pectin: 0.1%
- - sugars*: 13%
- - edible antioxidants and flavourings: to 100%

- total protein content: 0.7%
- total lipid content: 1%
- total carbohydrate content: 14.50%

* includes a mixture of dextrose, sucrose, fructose, invert sugar and sorbitol.

70 g of sucrose, 2 g of pectin and 30 g of dried coconut milk were dissolved in 340 g of low-fat yoghurt at 30°C.

The mixture thus obtained had a pH of about 4.4.

An aqueous phase was prepared separately including 1300g of Java jute infusion at 70°C, the remaining content being sugars and 1 g of propylene glycol alginate. The mixture was cooled to 10°C and had an acidic pH of about 3. The aqueous phase was mixed with the yoghurt phase at 10°C and the product thus obtained was pasteurised, for example at 80°C for about 3 minutes, followed by homogenisation preferably carried out in two stages at a temperature of about 70°C.

The homogenised product was cooled to 20°C and then flavourings were added. It will be understood that further measures of fruit juices or fruit extracts may be added to the aqueous phase, preferably before mixing with the yoghurt phase.

The drink thus obtained had a pH of about 3.45 and a total solids content of about 16%.

The drink thus obtained, bottled in glass bottles under sterilised conditions, was kept at a conservation temperature in programmed cycles of between 16 and 35°C for three months without showing any evidence of deterioration of its organoleptic characteristics, both with regards to its flavour and absence of separation of the phases.

### Example 2

A drink was prepared including the following ingredients, expressed in percentages by weight:
- - Java jute infusion: 65%
- - skimmed milk: 17%
- - dried coconut powder: 1.5%
- - propylene glycol alginate: 0.05%
- - pectin: 0.1%
- - sugars*: 13%
- - milk enzymes: 0.15%
- - fruit juices and fruit concentrate: 2.5%
- - various flavourings: to 100%

- total protein content: 0.7%
- total lipid content: 1.0%

* includes a mixture of dextrose, sucrose, fructose, invert sugar and sorbitol.

An aqueous phase was prepared including 1100 g of Java jute infusion to which the sugars, particularly invert sugar, dextrose, fructose and sorbitol and 1 g of propylene glycol alginate were added at 70°C. This was cooled to 40°C after which a portion of the total content of fruit concentrate was added and the mixture was cooled to 10°C.

A phase based on skimmed milk was prepared separately at 70°C and included 492 g of skimmed milk to which the measure of sucrose, the dried coconut milk and the pectin were added under agitation and the mixture was cooled to 10°C.

The aqueous phase and the milk-based phase were mixed at 10°C to give a mixture having a pH of about 5. After mixing, the mixture was inoculated with the enzyme dosage and fermentation was carried out at 44°C for about 8 hours. Fermentation was stopped by cooling to 10°C. A phase constituted by an aqueous infusion of about 800 g of Java jute was prepared separately and in this was dissolved part of the total quantity of propylene glycol alginate, sucrose and the remaining quantity of the fruit concentrate, the mixture being cooled to 10°C. The phase thus obtained was mixed at 10°C with the phase obtained from the fermentation. After this the mixture was pasteurised, preferably at 80°C for 3 minutes, and homogenised, preferably at 70°C in 2 stages.

After cooling to 20°C, the further quantity of flavourings was added and the drink thus obtained could be packaged in sterilized bottles.

The final drink had a pH of about 3 and a total solids content of 17.5%.

Stability tests carried out by subjecting the drink to temperature cycles of between 16 and 35°C for an extended period of time showed an absence of degradation, both in terms of aroma and flavour and physical properties.

## Claims

1. A drink with an acidic pH based on an aqueous mixture of a vegetable extract, juice or infusion and fermented milk products, comprising:
a) pectin and
b) a polyol alginate, characterised in that it comprises
c) from 0,1 to 5% wt of dried coconut milk.

2. A drink according to Claim 1, including from 0.5 to 2% by weight of dried coconut milk.

3. A drink according to any one of Claims 1 or 2, characterised in that it includes up to 1% by weight of pectin.

4. A drink according to any one of the preceding Claims, in which the alginate is propylene glycol alginate and is present in quantities of from 0.01 to 0.5% by weight.

5. A drink according to any one of the preceding Claims, in which the sugars are selected from sucrose, dextrose, fructose, invert sugar, sorbitol and their mixtures.

6. A drink according to any one of the preceding Claims, in which the infusion is selected from infusions of tea, Java jute and dog-rose.

7. A drink according to any one of the preceding Claims, having a pH of less than 5 and preferably between 3 and 4.5.

8. A drink according to any one of the preceding Claims, in which the milk product is skimmed milk further including milk enzymes.

9. A drink according to any one of the preceding Claims, having a protein content of not more than 2% by weight and a lipid content of not more than 2% by weight.

10. A drink according to any one of Claims 1 to 7, in which the milk product is low-fat yoghurt.

11. A drink according to Claim 8 or Claim 9, characterised in that it is obtainable by lactic fermentation of a dilute suspension obtained by mixing a phase based on skimmed milk and a flavoured infusion in the presence of components a), b) and c).

12. A drink according to Claim 11, as obtainable by lactic fermentation carried out to a stage at which at least 40% by weight of the lactose is converted.

13. A method for the preparation of a drink based on an aqueous mixture of a vegetable extract, juice or infusion and milk products according to Claim 1 characterised in that it includes the steps of:
a) preparing an aqueous sugar composition including the vegetable extract, juice or infusion, sugars and a polyol alginate,
b) preparing separately a composition including a milk product, pectin and from 0.1 to 5% wt of dried coconut milk,
c) mixing the composition a) with the composition b) at a temperature not higher than 15°C, preferably not higher than 10°C, and
d) pasteurising and homogenising the mixture thus obtained.

14. A method according to Claim 13, in which the milk-product-based phase includes low-fat yoghurt.

15. A method according to Claim 13, in which the milk-product-based phase includes skimmed milk and in which the product of the mixture of phases a) and b) is fermented by inoculation with milk enzymes.

16. A method according to Claim 15, in which the fermentation is carried out at a temperature and for a time such as to convert at least 40% of the lactose present originally.

17. A method according to Claim 15, in which an aqueous solution of a vegetable extract, juice or infusion having an acidic pH is added to the fermentation product.

18. A method for the preparation of a drink according to any one of Claims 1 to 7, including the step of preparing an aqueous mixture based on milk and a vegetable juice, extract or infusion including the components a), b) and c) and subjecting the mixture to lactic fermentation by inoculation with milk enzymes.

19. A method according to Claim 18, in which the mixture has a total solids content of not more than 25% by weight.

## Patentansprüche

1. Getränk mit einem sauren pH auf Basis einer wäßrigen Mischung eines pflanzlichen Extraktes, Saftes oder Aufgusses und fermentierter Milchprodukte, umfassend:
a) Pectin und
b) ein Polyolalginat, dadurch **gekennzeichnet,** daß es
c) 0,1 bis 5 Gew.-% getrockneter Kokosnußmilch umfaßt.

2. Getränk gemäß Anspruch 1, enthaltend 0,5 bis 2 Gew.-% getrockneter Kokosnußmilch.

3. Getränk gemäß einem der Ansprüche 1 oder 2,
dadurch **gekennzeichnet,** daß
es bis zu 1 Gew.-% Pectin enthält.

4. Getränk gemäß einem der vorhergehenden Ansprüche, indem das Alginat Propylenglykolalginat ist, welches in Mengen von 0,01 bis 0,5 Gew.-% vorliegt.

5. Getränk gemäß einem der vorhergehenden Ansprüche, indem die Zucker aus Sucrose, Dextrose, Fructose, Invertzucker, Sorbitol und ihren Mischungen ausgewählt sind.

6. Getränk gemäß einem der vorhergehenden Ansprüche, indem der Aufguß aus Aufgüssen von Tee, Java-Jute und Hundsrose ausgewählt ist.

7. Getränk gemäß einem der vorhergehenden Ansprüche, mit einem pH von weniger als 5 und vorzugsweise zwischen 3 und 4,5.

8. Getränk gemäß einem der vorhergehenden Ansprüche, indem das Milchprodukt Magermilch ist, die weiterhin Milchenzyme enthält.

9. Getränk gemäß einem der vorhergehenden Ansprüche, mit einem Proteingehalt von nicht mehr als 2 Gew.-% und einem Lipidgehalt von nicht mehr als 2 Gew.-%.

10. Getränk gemäß einem der Ansprüche 1 bis 7, indem das Milchprodukt ein Niederfett-Yoghurt ist.

11. Getränk gemäß Anspruch 8 oder Anspruch 9,
dadurch **gekennzeichnet,** daß
es durch Milchsäurefermentation einer verdünnten Suspension, die durch Mischen einer Phase auf Magermilchbasis und eines aromatisierten Aufgusses in Anwesenheit der Komponenten a), b) und c) erhalten wurde, erhältlich ist.

12. Getränk gemäß Anspruch 11, erhältlich durch Milchsäurefermentation, die bis zu einer Stufe, bei der mindestens 40 Gew.-% der Lactose umgewandelt wurden, durchgeführt wird.

13. Verfahren zur Herstellung eines Getränkes auf Basis einer wäßrigen Mischung eines pflanzlichen Extraktes, Saftes oder Aufgusses und Milchprodukten gemäß Anspruch 1,
dadurch **gekennzeichnet,** daß
es die Schritte einschließt:
a) Herstellen einer wäßrigen Zuckerzusammensetzung, enthaltend den pflanzlichen Extrakt, Saft oder Aufguß, Zucker und ein Polyolalginat,
b) getrenntes Herstellen einer Zusammensetzung enthaltend ein Milchprodukt, Pectin und von 0,1 bis 5 Gew.-% getrocknete Kokosnußmilch,
c) Mischen der Zusammensetzung a) mit der Zusammensetzung b) bei einer Temperatur nicht höher als 15°C, vorzugsweise nicht höher als 10°C, und
d) Pasteurisieren und Homogeniseren der so erhaltenen Mischung.

14. Verfahren gemäß Anspruch 13, indem die Phase auf Milchproduktbasis Niederfett-Yoghurt einschließt.

15. Verfahren gemäß Anspruch 13, indem die Phase auf Milchproduktbasis Magermilch enthält und indem das Produkt der Mischung der Phasen a) und b) durch Impfung mit Milchenzymen fermentiert wird.

16. Verfahren gemäß Anspruch 15, indem die Fermentierung bei einer Temperatur und über einen Zeitraum durchgeführt ist, so daß mindestens 40 % der ursprünglich vorhandenen Lactose umgesetzt werden.

17. Verfahren gemäß Anspruch 15, indem eine wäßrige Lösung eines pflanzlichen Extraktes, Saftes oder Aufgusses mit einem sauren pH zu dem Fermentierungsprodukt hinzugefügt wird.

18. Verfahren zur Herstellung eines Getränkes gemäß einem der Ansprüche 1 bis 7, enthaltend den Schritt des Herstellens einer wäßrigen Mischung auf Basis von Milch und eines pflanzlichen Saftes, Extraktes oder Aufgusses enthaltend die Komponenten a), b) und c) und Unterwerfen der Mischung einer Milchsäurefermentation durch Impfen mit Milchenzymen.

19. Verfahren gemäß Anspruch 18, indem die Mischung einen Gesamtfeststoffgehalt von nicht mehr als 25 Gew.-% hat.

## Revendications

1. Boisson ayant un pH acide, à base d'un mélange aqueux d'un extrait végétal, jus ou infusion, et de produits laitiers fermentés, comprenant :
a) de la pectine, et
b) un alginate de polyol, caractérisée en ce qu'elle comprend
c) 0,1 à 5 % en poids de lait de coco déshydraté.

2. Boisson suivant la revendication 1, comprenant 0,5 à 2 % en poids de lait de coco déshydraté.

3. Boisson suivant l'une quelconque des revendications 1 ou 2, caractérisée en ce qu'elle comprend jusqu'à 1 % en poids de pectine.

4. Boisson suivant l'une quelconque des revendications précédentes, dans laquelle l'alginate est un alginate de propylène-glycol et est présent en des quantités de 0,01 à 0,5 % en poids.

5. Boisson suivant l'une quelconque des revendications précédentes, dans laquelle les sucres sont choisis entre le saccharose, le dextrose, le fructose, le sucre inversé, le sorbitol et leurs mélanges.

6. Boisson suivant l'une quelconque des revendications précédentes, dans lquelle l'infusion est choisie entre des infusions de thé, de jute de Java et d'églantier.

7. Boisson suivant l'une quelconque des revendications précédentes, ayant un pH inférieur à 5 et de préférence dans la plage de 3 à 4,5.

8. Boisson suivant l'une quelconque des revendications précédentes, dans laquelle le produit laitier consiste en lait écrémé comprenant en outre des enzymes du lait.

9. Boisson suivant l'une quelconque des revendications précédentes, ayant une teneur en protéines non supérieure à 2 % en poids et une teneur en lipides non supérieure à 2 % en poids.

10. Boisson suivant l'une quelconque des revendications 1 à 7, dans laquelle le produit laitier est un yaourt à basse teneur en matières grasses.

11. Boisson suivant la revendication 8 ou la revendication 9, caractérisée en ce qu'elle peut être obtenue par fermentation lactique d'une suspension diluée obtenue en mélangeant une phase à base de lait écrémé et une infusion aromatisée en présence des constituants a), b) et c).

12. Boisson suivant la revendication 11, pouvant être obtenue par une fermentation lactique effectuée à un stade auquel au moins 40 % en poids du lactose sont transformés.

13. Procédé pour la préparation d'une boisson à base d'un mélange aqueux d'un extrait végétal, jus ou infusion, et de produits laitiers suivant la revendication 1, caractérisé en ce qu'il comprend les étapes consistant :
a) à préparer une composition aqueuse de sucres comprenant l'extrait végétal, jus ou infusion, des sucres et un alginate de polyol,
b) à préparer séparément une composition comprenant un produit laitier, de la pectine et 0,1 à 5 % en poids de lait de coco déshydraté,
c) à mélanger la composition a) à la composition b) à une température non supérieure à 15°C, de préférence non supérieure à 10°C, et
d) à pasteuriser et homogénéiser le mélange ainsi obtenu.

14. Procédé suivant la revendication 13, dans lequel la phase à base de produit laitier comprend un yaourt à basse teneur en matières grasses.

15. Procédé suivant la revendication 13, dans lequel la phase à base de produit laitier comprend du lait écrémé, et dans lequel le produit du mélange des phases a) et b) est fermenté par ensemencement avec des enzymes du lait.

16. Procédé suivant la revendication 15, dans lequel la fermentation est effectuée à une température et pendant un temps permettant de transformer au moins 40 % du lactose présent initialement.

17. Procédé suivant la revendication 15, dans lequel une solution aqueuse d'un extrait végétal, jus ou infusion, ayant un pH acide est ajoutée au produit de fermentation.

18. Procédé pour la préparation d'une boisson suivant l'une quelconque des revendications 1 à 7, comprenant l'étape consistant à préparer un mélange aqueux à base de lait et d'un jus végétal, extrait ou infusion comprenant les constituants a), b) et c) et à soumettre le mélange à une fermentation lactique par ensemencement avec des enzymes du lait.

19. Procédé suivant la revendication 18, dans lequel le mélange a une teneur totale en matières solides non supérieure à 25 % en poids.
